# EUROPÄISCHE PATENTSCHRIFT

(11) **EP 2 381 712 B1**
(45) Veröffentlichungstag und Bekanntmachung des Hinweises auf die Patenterteilung: **02.06.2021**
(21) Anmeldenummer: 11160904.6
(22) Anmeldetag: 01.04.2011
(51) Int. Cl.: H04W 12/06, H04W 12/12

(54) **Sicheres Auslesen von Daten aus einem Funkgerät mit festintegriertem TPM**
Secure Reading Data from a Mobile Device with fixed TPM
Lecture sécurisée de données à partir d'un appareil mobile avec TPM fixe

(30) Priorität: 26.04.2010 DE 102010028217
(43) Veröffentlichungstag der Anmeldung: 26.10.2011
(73) Patentinhaber: Bundesdruckerei GmbH, 10958 Berlin (DE)
(72) Erfinder: Bortfeldt-Herkendell, Shirley, Dr., 10117 Berlin (DE)
(74) Vertreter: Richardt Patentanwälte PartG mbB

(56) Entgegenhaltungen:
- WO-A1-2010/043722
- WO-A2-98/59518
- DE-A1-102007 004 337
- DE-A1-102007 012 749
- US-A1- 2005 289 347

## Beschreibung

Die vorliegende Erfindung betrifft ein elektronisches Gerät, insbesondere ein tragbares Gerät, wie zum Beispiel ein Mobilfunkgerät, ein Telekommunikationssystem und ein Verfahren zum Lesen von Daten aus einem elektronischen Gerät.

Das GSM Mobilfunk-Netzwerk erlaubt die Sperrung eines als gestohlenen gemeldeten Mobiltelefons, im folgenden als Handy bezeichnet, anhand dessen International Mobile Equipment Identity (IMEI). Bei der IMEI handelt es sich um einen Identifikator des Handys, dessen Vergabe durch die Hersteller festgelegt ist, vgl. "IMEI Allocation and Approval Guidelines", Version 3.7, Dezember 2008, GSMA.

Aus dem Stand der Technik ist ferner die Speicherung von schutzbedürftigen Daten auf Chipkarten bekannt, die auch als Smartcards oder als Integrated Circuit (IC) Cards bezeichnet werden. Nachteilig ist hierbei, dass ein Benutzer die Chipkarte oder mehrere verschiedene Chipkarten für unterschiedliche Anwendungen mit sich führen muss.

Aus der DE 10 2007 012 749 A1 ist ein Verfahren zum Bereitstellen von Diensten für Endgeräte gezeigt, wobei die Endgeräte ein sogenanntes Tamper Proof Module (TPM) aufweisen, das eine Dienstanweisung mit einer Identitätsbehauptung, die durch einen konfigurierbaren Identitätsnachweis, der vorab im TPM gespeichert wurde, signiert wird, an einen Server sendet, wodurch für den Zugriff auf den Server keine Online-Verbindung zum Netzbetreiber erforderlich ist. Das TPM Module wiest eine Single Sign-ON-Einheit auf, die bei einer Anforderung eines gewünschten Dienstens die in dem TPM Module enthaltenden Informationen aus Zugriffskontrollliste ACL (Access Control List) ausliest. Das TPM-Module fügt eine Identitätsbehauptung (ID-Assertion) in eine Diensteanforderung (Service Request) ein und signiert die Identitätsbehauptung durch einen aus der Zugriffskontrollliste ACL ausgelesenen Identitätsnachweis (Credential).

Aus der WO 2010/ 043722 A1 ist ein Verfahren zur Multifaktor-Autorisierung einer Transaktion in einem System mit einem Endgerät gezeigt, wobei das Verfahren umfasst: Bestimmen von Token-Erkennungsdetails für ein Token, das zum Veranlassen einer Transaktion verwendet werden soll; Ermitteln eines Autorisierungsschlüssels; Bestimmen eines Mobilgeräts, das dem Token zugeordnet ist; Bestimmen des Standorts des Mobilgeräts; Autorisieren der Transaktion, wenn der Standort des Mobilgeräts innerhalb eines vorbestimmten Bereichs in Bezug auf den Standort der Transaktion liegt und der Autorisierungsschlüssel erfolgreich gegenüber den Token-Erkennungsdetails validiert ist. Die Erkennung des Mobilgeräts kann durch Empfangen eines eindeutigen Kennzeichens vom Mobilgerät überprüft werden. Das eindeutige Kennzeichen einen Code umfasst, der von Informationen abgeleitet ist, die sich auf Folgendes beziehen: Hardware des Mobilgeräts und Informationen, die vom Global Navigation Satellite System (GNSS) empfangen werden.

Der Erfindung liegt demgegenüber die Aufgabe zugrunde, ein verbessertes elektronisches Mobilfunkgerät, ein Telekommunikationssystem und ein Verfahren zum Lesen von Daten aus einer oder mehrerer einem Mobilfunkgerät zugeordneten Chipkarten zu schaffen.

Die der Erfindung zugrunde liegenden Aufgaben werden jeweils mit den Merkmalen eines Mobilfunkgeräts gemäß Anspruch 1, den Merkmalen eines Telekommunikationssystem gemäß Anspruch 9 und den Merkmalen des Verfahrens gemäß Anspruch 13 gelöst. Ausführungsformen der Erfindung sind in den abhängigen Patentansprüchen angegeben.

In einem Beispiel der Erfindung wird ein elektronisches Gerät (wie z. B. Mobilfunkgerät) mit einer Kommunikations-Schnittstelle zu einem Kommunikationsnetz und Prozessormitteln zur Ausführung eines Programms geschaffen, wobei das Programm ausführbare Programminstruktionen und eine Datei beinhaltet.

Das elektronische Gerät hat ein Tamper Proof Module (TPM) zur Sicherung des Programms, insbesondere ein Trusted Plattform Modul. Das Programm ist zur Verarbeitung eines über die Kommunikations-Schnittstelle des elektronischen Geräts empfangenen Lesekommandos ausgebildet, wobei in dem Lesekommando Daten der Datei spezifiziert sind. Die ausgelesenen Daten werden über die Kommunikations-Schnittstelle ausgegeben.

Ausführungsformen der Erfindung sind besonders vorteilhaft, da das durch das TPM gesicherte Programm die Funktionalität eines Hardware-Tokens, insbesondere einer Chipkarte, zur Verfügung stellen kann. Hierbei ist besonders vorteilhaft, dass einerseits der Aufwand für die Produktion und Distribution von Chipkarten eingespart werden kann und dass andererseits das Mitführen von ein oder mehreren Chipkarten zusätzlich zu einem elektronischen Gerät entfallen kann.

Erfindungsgemäß ist dem elektronischen Gerät ein Identifikator zugeordnet. Hierbei kann es sich um die IMEI oder einen anderen Identifikator handeln. Die Kommunikations-Schnittstelle des elektronischen Geräts ist dazu ausgebildet, anlässlich eines Einwahlversuchs in das Kommunikationsnetz den von dem TPM signierten Identifikator über das Kommunikationsnetz zu senden, beispielsweise an eine Netzkomponente des Kommunikationsnetzes oder an einen Servercomputer eines Trust Centers . Die Signatur des Identifikators durch das TPM schafft ein erhöhtes Maß an Sicherheit gegen Manipulationen.

Nach einer Ausführungsform der Erfindung wird für die Erzeugung der elektronischen Signatur ein asymmetrisches kryptografisches Schlüsselpaar einer Public Key Infrastructure (PKI) und ein dazugehöriges Zertifikat verwendet, wobei das Schlüsselpaar dem TPM zugeordnet ist. Zu der Signatur des Identifikators gehört dann neben dem durch Verschlüsselung des Identifikators mit dem privaten Schlüssel resultierenden Chiffrat auch das Zertifikat. Dies erhöht den Schutz gegen Manipulationen weiter, indem die Validität der Signatur des Identifikators anhand des Zertifikats geprüft werden kann. Dabei kann insbesondere auch überprüft werden, ob das Zertifikat als solches gültig ist oder auf einer Certificate Revocation List (CRL) vorhanden ist.

Die Überprüfung kann beispielsweise so erfolgen, dass zur Einwahl des elektronischen Geräts in das Kommunikationsnetz über einen Mobilfunk-Provider eine sichere Datenverbindung zu dem Servercomputer, zum Beispiel eines Trust-Centers, aufgebaut wird. Durch diesen Servercomputer erfolgt die Prüfung der Validität der Signatur, insbesondere anhand einer dort vorhandenen CRL.

Nach einer Ausführungsform der Erfindung beinhaltet das Zertifikat die Nummer der Zentraleinheit im Handy, beispielsweise die sogenannte IMEI, und/oder einen weiteren Identifikator, der aus den in dem elektronischen Gerät gespeicherten Daten und/oder aus dessen elektronischen Komponenten gebildet werden kann.

Nach einer Ausführungsform der Erfindung wird von dem Servercomputer die Übereinstimmung des von dem elektronischen Gerät gesendeten Identifikators mit einem in dem Zertifikat beinhalteten Identifikator geprüft. Eine Manipulation des von dem Handy gesendeten Identifikators wird so zwangsläufig eine Diskrepanz dieses Identifikators mit dem in dem Zertifikat gespeicherten Identifikator zur Folge haben, da der in dem Zertifikat gespeicherte Identifikator aufgrund der Signierung des Zertifikats nicht geändert werden kann.

Nach einer Ausführungsform der Erfindung wird ein Freigabesignal zum Beispiel durch den Servercomputer generiert, und zwar unter der Voraussetzung, dass die Signatur valide ist, und dass der von dem elektronischen Gerät gesendete Identifikator mit dem in dem Zertifikat beinhalteten Identifikator übereinstimmt.

Nach einer Ausführungsform der Erfindung kann der Besitzer des elektronischen Geräts telefonisch, zum Beispiel über eine Sperrhotline, oder über einen anderen Kommunikationsweg, eine Verlustmeldung aufgeben, um den Verlust des elektronischen Geräts gegenüber dem Servercomputer anzuzeigen. Daraufhin wird das betreffende Zertifikat in die CRL aufgenommen, wodurch es gesperrt wird. Statt einer kompletten Sperrung des elektronischen Geräts kann auch vorgesehen sein, dass lediglich einzelne Programme oder einzelne Softdokumente des elektronischen Geräts gesperrt werden.

Nach Ausführungsformen der Erfindung sind nach der Sperrung des elektronischen Geräts verschiedene Sanktionen möglich. Beispielsweise kann das elektronische Gerät nur durch Einspielen eines neuen validen Zertifikats, durch eine hierzu autorisierte Stelle, wieder aktiviert werden. Auch ist die Sperrung missbräuchlich freigeschalteter elektronischer Geräte nachträglich möglich.

Nach einer Ausführungsform der Erfindung wird das elektronische Gerät geordet, wenn es als gesperrt gemeldet worden ist, oder wenn der von dem elektronischen Gerät gesendete Identifikator nicht mit dem in dem Zertifikat beinhalteten Zertifikator übereinstimmt. Hierzu kann das elektronische Gerät über einen GPS-Empfänger verfügen und ein Ergebnis einer GPS-Ortung über das Kommunikationsnetz, zum Beispiel an den Servercomputer, senden. Alternativ kann die Ortung des elektronischen Geräts auch durch das Kommunikationsnetz erfolgen, wie zum Beispiel durch Triangulation oder andere Ortungsverfahren.

Erfindungsgemäß wird ein besonders wirksamer und gleichzeitig für den Besitzer des Handys gefahrloser Diebstahlschutz zur Verfügung gestellt: Wird der Besitzer beispielsweise unter Androhung von Gewalt dazu aufgefordert, sein elektronisches Gerät an einen Räuber herauszugeben, so kann der Besitzer dies ohne Weiteres tun, da nach dem Diebstahl eine Sperrung des elektronischen Geräts erfolgen kann. Der Diebstahl bzw. der Raub eines solchen erfindungsgemäßen elektronischen Geräts wird dadurch unattraktiv.

Nach einer Ausführungsform der Erfindung ist ein zusätzlicher Schutz dadurch gegeben, dass der dem elektronischen Gerät zugeordnete Identifikator nicht permanent in dem elektronischen Gerät gespeichert ist, sondern im Bedarfsfall durch Abfrage verschiedener der elektronischen Komponenten des Geräts generiert wird. Beispielsweise haben die einzelnen elektronischen Komponenten ihrerseits eindeutige Codes, sodass bei einem Austausch einer der Komponenten durch eine hierzu nicht autorisierte Stellung zwangsläufig der Identifikator des elektronischen Geräts verfälscht wird. Aufgrund der daraus resultierenden Diskrepanz mit dem in dem Zertifikat gespeicherten Identifikator wird eine weitere Nutzung des elektronischen Geräts unmöglich gemacht.

Nach einer Ausführungsform der Erfindung authentifizieren sich die elektronischen Komponenten des Geräts untereinander, beispielsweise mittels eines Challenge-Response-Verfahrens, wobei den elektronischen Komponenten jeweils ein asymmetrisches Schlüsselpaar zugeordnet ist. Hierdurch wird die Sicherheit gegen einen Austausch der Komponenten weiter erhöht.

Ausführungsformen der Erfindung sind ganz besonders vorteilhaft, da sowohl ein Schutz gegen unerlaubte Nutzung des elektronischen Geräts insgesamt als auch ein Schutz gegen die unerlaubte Nutzung nicht valider Soft-Dokumente des elektronischen Geräts gegeben ist. Beispielsweise wird anlässlich der Einwahl des elektronischen Geräts in das Kommunikationsnetz geprüft, ob hinsichtlich des elektronischen Geräts eine Sperrung vorliegt. Ist dies nicht der Fall, so kann anschließend über das Kommunikationsnetz eine Verbindung zwischen dem elektronischen Gerät und dem Lesegerät aufgebaut werden. Das Auslesen von Daten aus einem Soft-Dokument des elektronischen Geräts seitens des Lesegeräts erfolgt dann nur, wenn das entsprechende Programm, welches die zu lesenden Daten beinhaltet, als valide erkannt worden ist. Durch diesen zweistufigen Prozess, d.h. der Sicherung des elektronischen Geräts insgesamt vor unerlaubter Nutzung und der Sicherung von jedem einzelnen der Soft-Dokumente des elektronischen Geräts, wird ein besonders hohes Maß an Sicherheit und Vertrauenswürdigkeit erreicht, insbesondere für hoheitliche Anwendungen.

Nach Ausführungsformen der Erfindung handelt es sich bei dem elektronischen Gerät um ein Mobilfunkgerät, insbesondere ein Mobiltelefon, ein Smartphone oder einen tragbaren Computer mit einer Mobilfunk-Schnittschnelle oder eine andere Batterie betriebene tragbare Electronic Appliance, wie zum Beispiel einen Personal Digital Assistant (PDA) oder eine elektronische Kamera. Von besonderem Vorteil ist hier, dass ein Nutzer üblicherweise ohnehin ein Mobiltelefon mit sich führt, welches nach Ausführungsformen der Erfindung zusätzlich zu seiner Mobilfunkfunktion auch die Funktion von ein oder mehreren Chipkarten zur Verfügung stellen kann.

Nach Ausführungsformen der Erfindung handelt es sich bei dem TPM um ein Trusted Plattform Modul. Das TPM kann als ein Hardware-Token, insbesondere als ein separater Chip, ausgebildet sein, der mit dem elektronischen Gerät fest verbunden ist. Beispielsweise ist in diesem Fall in den TPM ein erstes asymmetrisches kryptografisches Schlüsselpaar mit einem ersten Zertifikat gespeichert, durch welches die Identität des elektronischen Geräts bestimmt ist.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Alternativ kann es sich bei dem TPM um einen von dem elektronischen Gerät lösbaren und für verschiedene elektronische Geräte einsetzbaren Hardware-Token handeln, wie zum Beispiel um einen USB-Stick oder eine Chipkarte. In diesem Fall wird durch das erste asymmetrische kryptografische Schlüsselpaar und das erste Zertifikat der Nutzer, dem das TPM zugeordnet ist, identifiziert und nicht das elektronische Gerät. Insbesondere kann es sich bei dieser Ausführungsform bei dem TPM um eine Telekommunikations-Chipkarte, insbesondere um eine Subscriber Identity Module (SIM)-Karte handeln.

Nach einer Ausführungsform der Erfindung handelt es sich bei dem elektronischen Gerät um ein Mobilfunkgerät nach einem digitalen Mobilfunkstandard, wie zum Beispiel dem GSM oder UMTS Mobilfunkstandard. Eine standardkonforme Telekommunikations-Chipkarte, wie zum Beispiel eine SIM-Karte, kann bei dieser Ausführungsform als TPM zur Sicherung des Programms verwendet werden. Dies ist besonders vorteilhaft, da auf diese Art und Weise die ohnehin vorhandene Telekommunikations-Chipkarte eine weitere Funktion erhält, aufgrund derer der Nutzer auf die Mitführung von einer oder mehreren weiteren Chipkarten für verschiedene Anwendungen, wie zum Beispiel Ausweisfunktionen oder Bezahlfunktionen, verzichten kann.

Nach einer Ausführungsform der Erfindung ist die Kommunikations-Schnittstelle des elektronischen Geräts als RFID-Schnittstelle oder als NFC-Schnittstelle ausgebildet. Die Kommunikations-Schnittstelle kann auch als Netzwerk-Schnittstelle ausgebildet sein, insbesondere als drahtlose oder drahtgebundene Netzwerk-Schnittstelle. Beispielsweise kann es sich bei der Netzwerk-Schnittstelle um eine Mobilfunk-Schnittschnelle oder eine Ethernet-Schnittstelle handeln.

Nach einer Ausführungsform der Erfindung ist die Kommunikations-Schnittstelle zur Ausführung des Internetprotokolls (IP) ausgebildet, insbesondere als TCP/IP-Schnittstelle. Bei dieser Ausführungsform kann dem Programm ein vordefinierter IP-Port der TCP/IP-Schnittstelle zugeordnet sein. Zum Zugriff auf die in dem elektronischen Gerät gespeicherten Daten sendet das Lesegerät dann das Lesekommando an diesen vordefinierten IP-Port der TCP/IP-Schnittstelle, wodurch die Ausführung der Programminstruktionen gestartet wird.

Nach einer weiteren Ausführungsform der Erfindung ist die Kommünikations-Schnittstelle als Web-Service nach einem Web-Service-Standard ausgebildet. In diesem Fall kann der Web-Service das Lesekommando in Form eines Web-Service-Request, insbesondere als SOAP-Request empfangen.

Nach einer Ausführungsform der Erfindung handelt es sich bei dem Lesekommando um ein Chipkarten-Kommando. Die Kommunikations-Schnittstelle ist dabei vorzugsweise so ausgebildet, dass sie eine Standard-Chipkarten-Schnittstelle emuliert. Dies hat den Vorteil, dass existente Chipkarten-Lesegeräte zum Lesen der Daten aus einem erfindungsgemäßen elektronischen Gerät verwendet werden können.

Nach einer Ausführungsform der Erfindung ist das TPM dazu ausgebildet, eine Signatur des Programms zu prüfen. Beispielsweise sind die Programminstruktionen und/oder die Datei und/oder die Daten oder ein daraus gebildeter HASH-Wert mit dem ersten privaten Schlüssel des TPM und dem ersten Zertifikat signiert. Bei der Signatur kann es sich insbesondere um signierte Speicherabbilder oder Ausschnitte daraus oder um signierte interne Zustände des elektronischen Geräts handeln. Sobald das Lesekommando empfangen wird, prüft das TPM die Gültigkeit dieser Signatur des Programms. Wenn die Signatur gültig ist, so gibt das TPM die Ausführung der Programminstruktionen frei; im gegenteiligen Fall wird die Ausführung der Programminstruktionen von dem TPM blockiert, sodass ein Zugriff auf die Daten verhindert wird.

Nach einer Ausführungsform der Erfindung sind die Datei und/oder die Daten mit einem zweiten öffentlichen Schlüssel, der zum Beispiel dem Lesegerät oder einer Chipkarte des Lesegeräts zugeordnet ist, verschlüsselt. Dies hat den besonderen Vorteil, dass ein Ausspähen der Datei und/oder der Daten aus dem elektronischen Gerät oder bei der Übertragung von dem elektronischen Gerät an das Lesegerät unterbunden wird.

Nach einer Ausführungsform der Erfindung sind die Datei und/oder die Daten mit Hilfe eines dritten kryptografischen Schlüsselpaars, beispielsweise von einem Trust-Center, signiert. Hierdurch wird in besonderem Maße die Vertrauenswürdigkeit der Gültigkeit der Datei bzw. der Daten sichergestellt.

Nach einer Ausführungsform der Erfindung werden die ausgelesenen Daten vor dem Senden an das Lesegerät durch das TPM mit Hilfe des ersten privaten Schlüssels und des ersten Zertifikats signiert. Dadurch wird die Vertrauenswürdigkeit weiter erhöht, da durch die Signatur die Sicherung des Programms durch das TPM dokumentiert wird.

Nach einer Ausführungsform der Erfindung handelt es sich bei der Datei um eine strukturierte Datei, die durch eine formale Beschreibungssprache, wie zum Beispiel XML oder ASN.1 definiert ist. Durch die Beschreibungssprache werden zum Beispiel Datenfelder der Datei definiert. Eine Instanz der so definierten Datei hat dann bestimmte Datenwerte in diesen Datenfeldern.

Bei den Datenwerten kann es sich zum Beispiel um Attribute handeln. Für eine Ausweisfunktion kann es sich hierbei um textuelle Angaben zu dem Namen, der Adresse etc. oder um Bilddaten für Gesichtsbilder und Fingerabdrücke handeln. Jeder einzelne Datenwert kann von der ausstellenden Instanz, insbesondere einem Trust-Center, verschlüsselt und/oder signiert sein sowie auch die gesamte Datei.

Ausführungsformen der Erfindung sind besonders vorteilhaft, da durch die Datei ein "Soft-Dokument" gegeben ist, d.h. ein virtuelles Dokument, das neben dem elektronischen Gerät und dem TPM keine weitere Hardware erfordert, und das dennoch die typischen Eigenschaften eines üblichen Wert- und Sicherheitsdokuments, wie Fälschungssicherheit und Sicherheit gegen unerlaubte Vervielfältigung, aufweist. Von ganz besonderem Vorteil ist dabei, dass das elektronische Gerät eine im Prinzip beliebige Anzahl solcher Soft-Dokumente tragen kann, die außerdem aktualisiert werden können, ohne dass die Hardware verändert werden muss.

Besonders vorteilhaft ist hierbei, dass durch das TPM ein Kopierschutz für die Datei gegeben ist. Beispielsweise ist die Datei und/oder das Programm, welches die Datei beinhaltet, mit einem privaten Schlüssel des TPM signiert, wodurch eine feste und nicht lösbare Zuordnung der Datei zu dem TPM gegeben ist. Vor dem Zugriff auf die Datei oder dem Start des Programms wird durch das TPM geprüft, ob die Signatur valide ist; nur wenn dies der Fall ist, können Daten aus der Datei ausgelesen werden und an das Lesegerät übertragen werden.

In einem weiteren Beispiel betrifft die Erfindung ein Telekommunikationssystem mit einem erfindungsgemäßen elektronischen Gerät, einer Netzkomponente des Telekommunikationsnetzes, einem Servercomputer und einem Lesegerät, wobei Netzkomponente zum Aufbau einer Kommunikationsverbindung zwischen dem elektronischen Gerät und dem Servercomputer ausgebildet ist, die zur Übertragung des signierten Identifikators von dem elektronischen Gerät zu dem Servercomputer dient, wobei der Servercomputer zur Prüfung der Validität der Signatur des Identifikators und zum Zugriff auf eine Sperrliste von Identifikatoren ausgebildet ist, wobei der Servercomputer zur Erzeugung eines Freigabesignals ausgebildet ist, wenn die Signatur des Identifikators valide ist und der Identifikator nicht gesperrt ist, wodurch die Einwahl in das Telekommunikationsnetz ermöglicht wird, wobei das Lesegerät eine Kommunikations-Schnittstelle zum Aufbau einer Kommunikationsverbindung mit der Kommunikations-Schnittstelle des elektronischen Geräts, Prozessormittel zur Generierung des Lesekommandos und zum Empfang der Daten über die Kommunikationsverbindung aufweist.

Nach einer Ausführungsform der Erfindung handelt es sich bei dem Identifikator um die IMEI des elektronischen Geräts, die auch in dem Zertifikat beinhaltet ist. Die Gültigkeit des von dem elektronischen Gerät an den Servercomputer gesendeten Identifikators wird dann mit Hilfe des Zertifikats überprüft. Alternativ oder zusätzlich zu der IMEI kann dem elektronischen Gerät ein Identifikator zugeordnet sein, der durch das elektronische Gerät im Bedarfsfall zum Beispiel durch Abfrage mehrerer Komponenten des elektronischen Geräts generiert wird. Dieser Identifikator wird von dem elektronischen Gerät wieder gelöscht, nachdem er signiert und zusammen mit dem Zertifikat an den Servercomputer gesendet worden ist.

In einem weiteren Beispiel betrifft die Erfindung ein Verfahren zum Lesen von Daten aus einem elektronischen Gerät mit den folgenden Schritten: Authentifizierung eines Nutzers gegenüber dem elektronischen Gerät, Start der Ausführung von Programminstruktionen zur Einwahl des elektronischen Geräts in eine Kommunikationsnetzwerk, Senden eines dem elektronischen Gerät zugeordneten mittels eines TPM signierten Identifikators an einen Servercomputer, Prüfung der Validität der Signatur des Identifikators und Prüfung, ob der Identifikator auf einer Sperrliste steht, durch den Servercomputer, Erzeugung eines Freigabesignals durch den Servercomputer, um die Einwahl des elektronischen Geräts in das Kommunikationsnetzwerk zu ermöglichen, Sicherung eines Programms des elektronischen Geräts mittels eines TPM, wobei das Programm ausführbare Programminstruktionen und eine Datei mit den Daten beinhaltet, Empfang eines Lesekommandos über eine Kommunikations-Schnittstelle des elektronischen Geräts, wobei in dem Lesekommando die auszulesenden Daten spezifiziert sind, Signierung der auszulesenden Daten durch das TPM mit Hilfe eines ersten kryptografischen Schlüsselpaars, welches den TPM zugeordnet ist, und Ausgabe der signierten Daten.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen elektronischen Geräts und eines erfindungsgemäßen Telekommunikationssystems,
- Figur 2: ein Blockdiagramm einer weiteren Ausführungsform eines erfindungsgemäßen elektronischen Geräts und eines erfindungsgemäßen Telekommunikationssystems,
- Figur 3: ein Flussdiagramm einer Ausführungsform eines erfindungsgemäßen Verfahrens,
- Figur 4: ein Flussdiagramm einer weiteren Ausführungsform eines erfindungsgemäßen Verfahrens.

Im Weiteren werden einander entsprechende Elemente der nachfolgenden Ausführungsformen mit denselben Bezugszeichen gekennzeichnet.

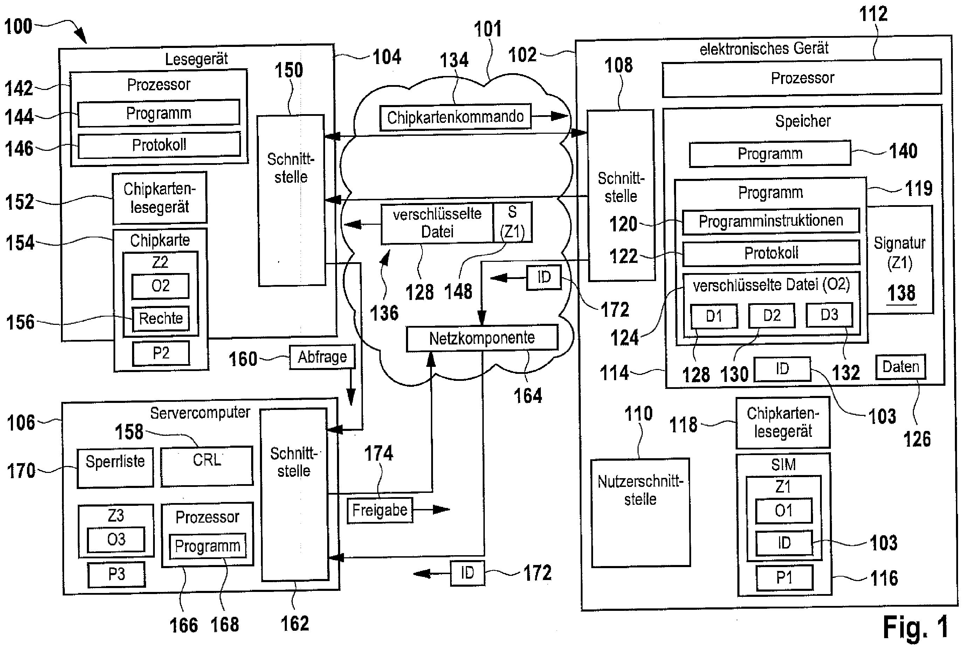

Figur 1 zeigt ein Blockdiagramm eines Telekommunikationssystems 100. Das Telekommunikationssystem 100 beinhaltet ein elektronisches Gerät 102, ein Lesegerät 104 und optional einen Servercomputer 106.

Bei dem elektronischen Gerät 102 kann es sich um ein tragbares elektronisches Gerät, wie zum Beispiel ein Mobiltelefon, handeln. Das elektronische Gerät 102 hat eine Kommunikations-Schnittstelle 108 zu einem Kommunikationsnetz 101. Diese kann beispielsweise nach einem digitalen Mobilfunkstandard ausgebildet sein, wie z.B. nach dem GSM oder UMTS Standard, sowie zur Ausführung des IP-Protokolls, insbesondere nach einem Mobile IP-Standard.

Das elektronische Gerät 102 hat eine Nutzer-Schnittstelle 110, die zum Beispiel ein Display und eine Tastatur aufweisen kann. Ferner hat das elektronische Gerät zumindest einen Prozessor 112 und einen elektronischen Speicher 114 sowie ein TPM.

Das TPM wird bei der hier betrachteten Ausführungsform durch eine SIM-Karte 116 gebildet, die sich in einem Chipkarten-Lesegerät 118 des elektronischen Geräts 102 befindet.

Der Prozessor 112 dient unter anderem zur Ausführung eines Programms, welches hier durch Programminstruktionen 120 und 122 sowie durch eine verschlüsselte Datei 124 gebildet wird. Die verschlüsselte Datei 124 ist in dem elektronischen Speicher 114 des elektronischen Geräts 102 gespeichert. In dem Speicher 114 können noch weitere Daten 126 gespeichert sein, insbesondere Nutzerdaten, wie zum Beispiel ein elektronisches Adressbuch oder andere Anwendungsdaten.

Die Datei 124 ist eine Instanz eines in seiner Struktur durch eine Beschreibungssprache definierten Dokuments. Bei der Beschreibungssprache kann es sich zum Beispiel um XML oder ASN.1 handeln. Die Datei 124 hat verschiedene, durch die Beschreibungssprache definierte Datenfelder, von denen in der Figur 1 die Datenfelder 128, 130 und 132 exemplarisch gezeigt sind, wobei diese Datenfelder mit Datenwerten D1, D2 bzw. D3 belegt sind. Bei den Datenwerten kann es sich zum Beispiel um Attributwerte handeln, wie zum Beispiel textuelle Angaben, oder um Bilddaten für Gesichtsbilder oder Fingerabdrücke. Die Datenwerte können separat verschlüsselt sein. Die Datenwerte können ferner einzeln signiert sein, und zwar beispielsweise von einem Trust-Center. Alternativ oder zusätzlich ist die Datei 124 insgesamt von dem Trust-Center signiert.

Die Programminstruktionen 120 des Programms 119 dienen zur Verarbeitung eines über die Kommunikations-Schnittstelle 108 empfangenen Lesekommandos 134, wobei das Lesekommando 134 die aus der Datei 124 auszulesenden verschlüsselten Daten spezifiziert. Die Programminstruktionen 120 dienen ferner dazu, eine Antwort 136 auf das Lesekommando 134 zu generieren und über die Kommunikations-Schnittstelle 108 zu senden.

Die Programminstruktionen 122 implementieren die das elektronische Gerät 102 betreffenden Schritte eines kryptografischen Protokolls zur Authentifizierung des Lesegeräts 104 gegenüber dem elektronischen Gerät 102. Zusätzlich kann auch eine Authentifizierung des elektronischen Geräts 102 gegenüber dem Lesegerät 104 vorgesehen sein. Bei dem kryptografischen Protokoll, welches von den Programminstruktionen 122 implementiert wird, kann es sich zum Beispiel um ein Challenge-Response-Protokoll handeln.

Das Programm 119 oder dessen Teile haben eine Signatur 138 des TPM, d.h. hier der SIM-Karte 116. Zur Erzeugung der Signatur 138 wird beispielsweise ein HASH-Wert aus den Programminstruktionen 120 und/oder der verschlüsselten Datei 124 gebildet, der dann von der SIM-Karte 116 mit Hilfe von deren privaten Schlüssel P1 verschlüsselt wird.

Der Prozessor 112 dient ferner zur Ausführung eines oder mehrerer weiterer Programme, wie zum Beispiel eines Programms 140, durch welches eine Mobilfunk-Funktionalität des elektronischen Geräts 102 zur Verfügung gestellt wird. Beispielsweise ist das Programm 140 für die Einwahl des elektronischen Geräts 102 in das Kommunikationsnetz 101 ausgebildet sowie zum Zugriff auf die Daten 126.

In dem elektronischen Gerät 102 können weitere Programme gespeichert sein, die strukturell zu dem Programm 116 analog aufgebaut sind.

Beispielsweise wird durch die Programminstruktionen 120 eine Chipkartenfunktion implementiert. Durch das Programm 119, welches durch die SIM-Karte 116 gesichert ist, erhält das elektronische Gerät 102 also die Funktion einer Chipkarte mit einer bestimmten Chipkartenfunktion. Eine separate Chipkarte, durch die eine solche Chipkartenfunktion gegeben ist, ist also nicht mehr erforderlich, da diese nunmehr in das elektronische Gerät 102 integriert ist. Entsprechend können auch die Chipkartenfunktionen weiterer Chipkarten in das elektronische Gerät 102 integriert werden, indem weitere Programme des Typs des Programms 119, die entsprechenden Chipkartenfunktionen und Daten beinhalten, in dem elektronischen Gerät 102 gespeichert werden.

Das Programm 119 kann zum Beispiel Over the Air (OTA) von einem OTA-Server empfangen werden. Als Alternative zur Ausführung des Programms 119 durch den Prozessor 112 des elektronischen Geräts 102 kann dieses auch ganz oder teilweise von einem Prozessor der SIM-Karte 116 ausgeführt werden.

In der SIM-Karte 116 ist der private Schlüssel P1 und der öffentliche Schlüssel O1 eines ersten asymmetrischen kryptografischen Schlüsselpaars gespeichert, der dem Inhaber der SIM-Karte zugeordnet ist. Ferner ist in der SIM-Karte ein erstes Zertifikat Z1 gespeichert, welches den öffentlichen Schlüssel O1 beinhaltet.

Ferner kann in der SIM-Karte 116 ein Referenzwert für eine PIN gespeichert sein. Zur Freischaltung der SIM-Karte muss der Nutzer über die Nutzer-Schnittstelle 110 eine zutreffende PIN eingeben, die über das Chipkarten-Lesegerät in die SIM-Karte 116 eingegeben wird, sodass die SIM-Karte 116 die eingegebene PIN mit dem Referenzwert der PIN vergleichen kann.

Je nach Ausführungsform kann in dem elektronischen Gerät 102, beispielsweise in dessen Speicher 114, ein Identifikator 103 gespeichert sein. Durch den Identifikator 103 wird das elektronische Gerät 102 global oder zumindest innerhalb der möglichen Teilnehmer des Kommunikationsnetzes 101 eindeutig identifiziert. Beispielsweise kann es sich bei dem Identifikator 103 um die IMEI des elektronischen Geräts 102 handeln. Vorzugsweise ist der Identifikator 103 auch in dem Zertifikat Z1 der SIM-Karte 116 gespeichert.

Gemäß einer alternativen Ausführungsform wird der Identifikator 103 nicht permanent in dem nichtflüchtigen Speicher 114 gespeichert, sondern er wird zum Beispiel durch Ausführung des Programms 140 im Bedarfsfall generiert und dann nach Signierung und Absendung über die Schnittstelle 108 wieder gelöscht. Hierzu kann so vorgegangen werden, dass anstelle des Identifikators ein anderer Code permanent in dem Speicher 114 gespeichert wird, aus dem dann durch Ausführung des Programms 140 der Identifikator 103 berechnet wird. Bei diesem Code kann es sich zum Beispiel um einen sogenannten Seed-Value handeln.

In einer alternativen Ausführungsform wird durch das Programm 140 je ein Code von verschiedenen Komponenten des elektronischen Geräts 102 abgefragt. Beispielsweise sind der Nutzer-Schnittstelle 110, der Kommunikations-Schnittstelle 108, dem Prozessor 112 und dem Chipkarten-Lesegerät 118 jeweils ein bestimmter Code zugeordnet. Das Programm 140 fragt diese verschiedene Codes von den genannten Komponenten des elektronischen Geräts 102 ab, um daraus den Identifikator 103 abzuleiten. Hierzu können die verschiedenen Codes konkateniert werden und/oder als Seed Value zur Berechnung des Identifikators verwendet werden.

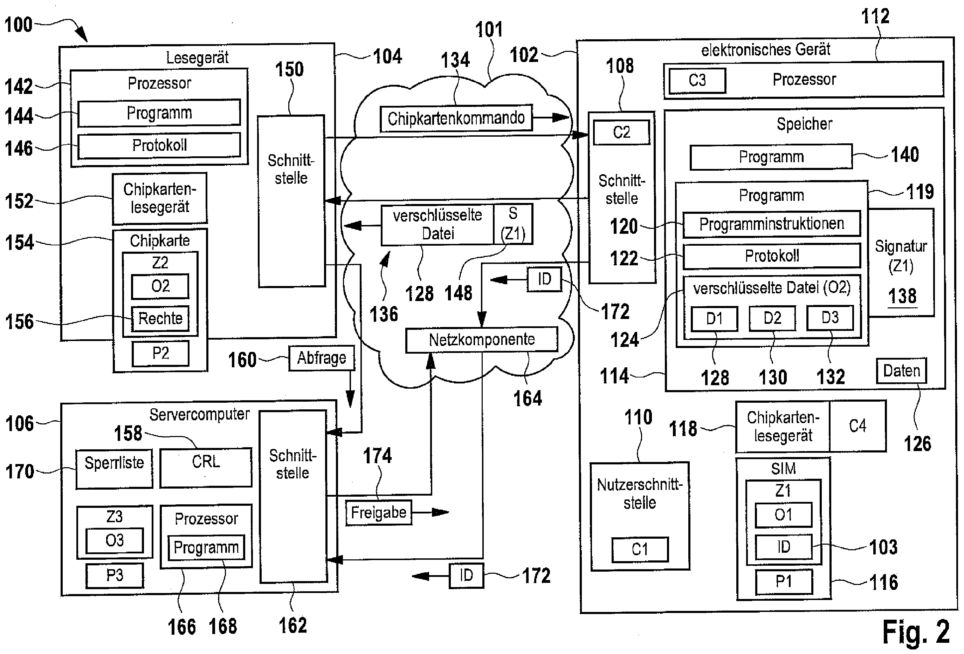

Nach einer alternativen Ausführungsform der Erfindung ist den genannten Komponenten des elektronischen Geräts 102 jeweils ein kryptografisches Schlüsselpaar zugeordnet, mit Hilfe dessen eine Authentifizierung dieser Komponenten gegenüber dem Programm 140 erfolgt. Hierzu wird auf die Ausführungsform gemäß Figur 2 verwiesen.

Das Lesegerät 104 hat zumindest einen Prozessor 142 zur Ausführung von Programminstruktionen 144 und von Programminstruktionen 146. Die Programminstruktionen 144 dienen zur Erzeugung des Lesekommandos 134, was beispielsweise als Chipkarten-Kommando ausgebildet sein kann. Die Programminstruktionen 144 dienen ferner zur Verarbeitung der Antwort 136 des elektronischen Geräts 102 auf das Lesekommando 134. Die Antwort 136 kann beispielsweise die Datei 124 oder einzelne verschlüsselte Daten der Datei 124 sowie deren von der SIM-Karte 116 erzeugte Signatur 148 beinhalten.

Eine Kommunikations-Schnittstelle 150 des Lesegeräts 104 dient zum Senden des Lesekommandos 134 und zum Empfang der Antwort 136.

Bei der hier betrachteten Ausführungsform hat das Lesegerät 104 ein Chipkarten-Lesegerät 152 zum Lesen einer Chipkarte 154. In der Chipkarte 154 ist ein privater Schlüssel P2 und der dazugehörige öffentliche Schlüssel 02 eines asymmetrischen kryptografischen Schlüsselpaars gespeichert sowie ein Zertifikat Z2, welches den öffentlichen Schlüssel 02 sowie eine Rechtespezifikation 156 beinhaltet. Durch die Rechtespezifikation 156 sind Leserechte zum Lesen von ein oder mehreren der Datenwerte der Datei 124 spezifiziert.

Durch die Programminstruktionen 146 werden die das Lesegerät 104 betreffenden Schritte des kryptografischen Protokolls implementiert, beispielsweise also des Challenge-Response-Protokolls für eine einseitige oder gegenseitige Authentifizierung von Lesegerät 104 und elektronischem Gerät 102.

Das Telekommunikationssystem 100 beinhaltet ferner einen Servercomputer 106, in dem eine Certificate Revocation List (CRL) 158 gespeichert ist. Das Lesegerät 104 kann den Servercomputer 106 z.B. über seine Kommunikations-Schnittstelle 150 abfragen, um die Validität eines Zertifikats zu prüfen. Der Servercomputer 106 hat eine Kommunikations-Schnittstelle 162 zur Kommunikation mit dem Lesegerät 104 und dem elektronischen Gerät 102 über das Kommunikationsnetz 101, wobei eine Kommunikationsverbindung zu dem Servercomputer 106 beispielsweise über eine Netzkomponente 164 des Kommunikationsnetzes 101 aufgebaut werden kann.

Der Servercomputer 106 hat ferner zumindest einen Prozessor 166 zur Ausführung von Programminstruktionen 168 sowie einen privaten Schlüssel P3, zu dem ein öffentlicher Schlüssel 03 gehört, der Teil eines Zertifikats Z3 ist. Der Servercomputer 106 kann ferner auf eine Sperrliste 170 zugreifen, in der Identifikatoren von elektronischen Geräten, zum Beispiel des Typs des elektronischen Geräts 102, gespeichert sind, die zum Beispiel als gestohlen gemeldet und daher gesperrt worden sind.

In das elektronische Gerät 102, wie zum Beispiel ein übliches Smartphone, kann eine Chipkartenfunktion, insbesondere die Funktion eines ID-Dokuments, eingebracht werden: Hierzu wird eine Instanz des Dokuments, d.h. die Datei 124 erzeugt und mit den persönlichen Angaben des Inhabers der SIM-Karte 116 personalisiert. Die daraus resultierenden Datenwerte, zum Beispiel D1, D2 und D3, werden von dem herausgebenden Trust-Center digital signiert und mit dem zweiten öffentlichen Schlüssel O2 einzeln verschlüsselt.

Das Programm 119 oder Teile davon werden mit Hilfe des privaten Schlüssels P1 der SIM-Karte 116 signiert, sodass die Signatur 138 erzeugt wird.

Der Nutzer des elektronischen Geräts 102 erhält die SIM-Karte 116 auf einem üblichen Weg, zum Beispiel per Post. Die SIM-Karte 116 wird von dem Nutzer in das Chipkarten-Lesegerät 116 des elektronischen Geräts 102 eingeführt. Das Programm 119 kann dann zum Beispiel von einem OTA-Server heruntergeladen und in dem elektronischen Gerät 102 installiert werden. Anschließend kann der Nutzer sein elektronisches Gerät ergänzend zu dessen eigentlicher Funktion zum Beispiel als ID-Dokument (Ausweisdokument) verwenden.

Hierzu kann wie folgt vorgegangen werden:
Nachdem der Nutzer das elektronische Gerät 102 eingeschaltet hat, muss sich der Nutzer gegenüber dem elektronischen Gerät zum Beispiel durch Eingabe seiner PIN authentifizieren. Die von dem Nutzer über die Nutzer-Schnittstelle 110 eingegebene PIN wird durch das Programm 140 über das Chipkarten-Lesegerät 118 in die SIM-Karte 116 eingegeben und mit dem dort gespeicherten Referenzwert der PIN verglichen. Liegt eine Übereinstimmung vor, so wird dies von der SIM-Karte 116 gegenüber dem Programm 140 signalisiert. Damit gilt der Nutzer als gegenüber dem elektronischen Gerät 102 authentisiert.

Das Programm 140 sendet daraufhin eine Einwahlanforderung 172 zur Einwahl in das Kommunikationsnetz 101 über die Kommunikations-Schnittstelle 108, zum Beispiel an die Netzkomponente 164 des Kommunikationsnetzes 101. Bei dieser Netzkomponente 164 kann es sich zum Beispiel um eine sogenannte Base Station, ein Mobile Switching Center (MSC) und/oder ein Home Location Register (HLR) handeln. Zur Generierung der Einwahlanforderung 172 liest oder generiert das Programm 140 den Identifikator 103 und übergibt diesen über das Chipkarten-Lesegerät 118 an die SIM-Karte 116, sodass der Identifikator 103 dort mit Hilfe des privaten Schlüssels P1 signiert wird. Zu dieser Signatur gehört auch das Zertifikat Z1.

Die Einwahlanforderung 172 mit dem Identifikator 103 und dessen Signatur wird von der Netzkomponente 164 oder einer anderer Netzkomponente 101, über die eine Kommunikationsverbindung zwischen der Kommunikations-Schnittstelle 108 und 162 aufgebaut worden ist, übertragen, sodass der Servercomputer 106 den signierten Identifikator 103 empfängt. Daraufhin wird durch Ausführung der Programminstruktionen 168 geprüft, ob der Identifikator 103 auf der Sperrliste 170 steht. Ist dies der Fall, so ist eine Einwahl des elektronischen Geräts 102 in das Kommunikationsnetz 101 nicht möglich, was von dem Servercomputer 106 beispielsweise an die Netzkomponente 164 des Kommunikationsnetzes 101 durch ein entsprechendes Sperrsignal signalisiert wird.

Steht der Identifikator 103 nicht auf der Sperrliste 170, so wird durch Ausführung der Programminstruktionen 168 geprüft, ob die Signatur des Identifikators 103 valide ist. Hierzu wird geprüft, ob der in dem Zertifikat Z1 angegebene Identifikator mit dem in der Einwahlanforderung 172 angegebenen Identifikator, der durch das Programm 140 zum Beispiel aus dem Speicher 114 gelesen oder generiert worden ist, übereinstimmt. Liegt keine Übereinstimmung vor, so wird wiederum das Sperrsignal generiert.

Wenn die beiden Identifikatoren hingegen übereinstimmen, so wird geprüft, ob das Zertifikat Z1 auf der CRL 158 steht. Wenn das Zertifikat Z1 auf der CRL 158 steht, so wird wiederum das Sperrsignal generiert. Ist das Gegenteil der Fall und ist die Signatur auch sonst valide, was zum Beispiel im Rahmen einer Zertifikatskettenprüfung durch den Servercomputer 106 nachzuprüfen ist, so wird ein mit Hilfe des privaten Schlüssels P3 des Servercomputers 106 signiertes Freigabesignal 174 an die Netzkomponente 164 gesendet. Daraufhin kann die Einwahl des elektronischen Geräts 102 in das Kommunikationsnetz 101 erfolgen.

Hierbei ist von besonderem Vorteil, dass sowohl eine Sperrung des elektronischen Geräts 102 als auch eine Sperrung der SIM-Karte 116 unabhängig voneinander vorgenommen werden kann. Wird nur das elektronische Gerät 102 als gestohlen gemeldet, so wird dessen weitere Nutzung unterbunden; der Inhaber der SIM-Karte 116 kann diese aber weiterhin nutzen, indem er die SIM-Karte 116 in das Chipkarten-Lesegerät eines anderen, zum Beispiel mit dem elektronischen Gerät 102 baugleichen Geräts oder eines anderen Handys einführt. Hierfür muss nur ein aktualisiertes Zertifikat mit dem Identifikator des baugleichen Geräts in der SIM-Karte 116 durch eine hierzu authorisierte Stelle gespeichert werden. Andererseits kann auch nur die Nutzung der SIM-Karte 116 dadurch gespeichert werden, dass deren Zertifikat Z1 auf die CRL 158 gesetzt wird. In diesem Fall kann der Nutzer das elektronische Gerät 102 mit einer anderen SIM-Karte weiter betreiben.

Wenn schließlich das elektronische Gerät 102 zusammen mit der SIM-Karte 116 entwendet wird, können sowohl der Identifikator 103 auf die Sperrliste 170 gesetzt als auch das Zertifikat Z1 in die CRL 158 aufgenommen werden, sodass weder das elektronische Gerät 102 noch die SIM-Karte 116 von einem hierzu nicht autorisierten Dritten verwendet werden können.

Nach einer erfolgreichen Einwahl des elektronischen Geräts in das Kommunikationsnetz 101 kann zum Beispiel ein Soft-Dokument, wie zum Beispiel ein als Soft-Dokument ausgebildeter Personalausweis des elektronischen Geräts 102, verwendet werden:
Für eine Ausweisprüfung wird zwischen den Kommunikations-Schnittstellen 150 und 108 eine Kommunikationsverbindung aufgebaut. Durch Ausführung der Programminstruktionen 144 wird das Lesekommando 134 generiert und über die Kommunikationsverbindung an das elektronische Gerät 102 gesendet. Durch die SIM-Karte 116 wird dann geprüft, ob das Programm 119 unversehrt ist, oder ob ein Manipulationsversuch vorliegt. Hierzu wird beispielsweise so vorgegangen, dass die Validität der Signatur 138 geprüft wird. Hierzu bildet die SIM-Karte 116 aus dem in dem elektronischen Gerät 102 installierten Programm 119 einen HASH-Wert und verschlüsselt diesen HASH-Wert mit dem privaten Schlüssel P1. Die sich daraus ergebende Signatur muss mit der Signatur 138 übereinstimmen, damit das Programm 119 als unversehrt betrachtet werden kann. Wenn diese Bedingung erfüllt ist, gibt die SIM-Karte 116 die Ausführung des Programms 119 frei. Hierdurch sind ein Schutz des Programms 119 und der Datei 124 gegen Manipulationen sowie ein Kopierschutz gegeben.

Daraufhin wird die Ausführung der Programminstruktionen 122 zur Durchführung des kryptografischen Protokolls für die Authentifizierung zumindest des Lesegeräts 114 gegenüber dem elektronischen Gerät 102 gestartet.

Beispielsweise ist das Lesekommando 134 signiert, d.h. es beinhaltet das Zertifikat Z2 der Chipkarte 154. Durch Ausführung der Programminstruktionen 122 wird dann eine Challenge generiert, beispielsweise eine Zufallszahl. Diese Zufallszahl wird mit dem öffentlichen Schlüssel 02 des Zertifikats Z2 durch das elektronische Gerät 102 verschlüsselt und das resultierende Chiffrat wird über die Kommunikationsverbindung an das Lesegerät 104 gesendet. Durch Ausführung der Programminstruktionen 146 wird unter Zugriff auf die Chipkarte 154 das Chiffrat mit Hilfe des privaten Schlüssels P2 entschlüsselt und das Resultat der Entschlüsselung wird über die Kommunikationsverbindung von dem Lesegerät 104 an das elektronische Gerät 102 übertragen. Wenn das so von dem elektronischen Gerät 102 empfangene Resultat der Entschlüsselung mit der ursprünglichen Challenge übereinstimmt, so gilt das Lesegerät 104 damit als authentifiziert.

Durch Ausführung der Programminstruktionen 120 wird dann geprüft, ob die in der Rechtespezifikation 156 angegebenen Zugriffsrechte zum Lesen der in dem Lesekommando 134 spezifizierten Daten ausreichend sind. Wenn die zum Lesen der angeforderten Daten erforderlichen Rechte in dem Zertifikat Z2 spezifiziert sind, so wird durch Ausführung der Programminstruktionen 120 auf die betreffenden Daten in dem Speicher 114 zugegriffen.

Ohne Beschränkung der Allgemeinheit wird hier davon ausgegangen, dass in dem Lesekommando 134 der Datenwert D1 spezifiziert ist. Es wird dann der verschlüsselte Datenwert D1 aus dem Speicher 114 ausgelesen und von der SIM-Karte 116 mit dem privaten Schlüssel P1 signiert, sodass die Signatur 158 resultiert. Die Antwort 136 wird dann durch den verschlüsselten Datenwert D1 des Datenfeldes 128 und dessen Signatur 158 gebildet.

Durch Ausführung der Programminstruktionen 144 und durch Zugriff auf die Chipkarte 154 wird dann seitens des Lesegeräts 104 eine Entschlüsselung des verschlüsselten Datenwerts D1 mit Hilfe des privaten Schlüssels P2 durchgeführt. Ferner wird die Signatur 148 verifiziert. Hierzu wird durch das Lesegerät 104 eine Abfrage 160 der CRL 158 des Servercomputers 102 durchgeführt, um die Gültigkeit des Zertifikats Z1 zu prüfen. Wenn das Zertifikat Z1 gültig ist und die Signatur auch ansonsten valide ist, wird seitens des Lesegeräts 104 davon ausgegangen, dass der Datenwert D1 authentisch ist. Dieser Datenwert kann dann zum Beispiel auf einen Bildschirm des Lesegeräts 104 angezeigt, weiterverarbeitet oder über ein Netzwerk weitergesendet werden.

Die Figur 2 zeigt ein Blockdiagramm einer weiteren Ausführungsform eines erfindungsgemäßen Telekommunikationssystems 100, bei der der Identifikator 103 nicht permanent in dem Speicher 114 gespeichert ist. Bei dieser Ausführungsform sind in verschiedenen Komponenten des elektronischen Geräts, wie zum Beispiel der Nutzer-Schnittstelle 110, der Kommunikations-Schnittstelle 108, dem Prozessor 112 und dem Chipkarten-Lesegerät 118 jeweils ein Code C1, C2, C3 bzw. C4 gespeichert. Ferner können diesen Komponenten jeweils ein kryptografisches Schlüsselpaar, bestehend aus einem privaten und einem öffentlichen Schlüssel, zugeordnet sein.

Zur Generierung des Identifikators 103 wird zunächst eine einseitige oder gegenseitige Authentifizierung der Nutzer-Schnittstelle 110, der Kommunikations-Schnittstelle 108, des Prozessors 112 und des Chipkarten-Lesegeräts 118 mit Hilfe der kryptografischen Schlüsselpaare durchgeführt, beispielsweise nach einem Challenge-Response-Protokoll. Anschließend fragt das Programm 140 den jeweiligen Code ab, der signiert von der betreffenden Komponente zum Beispiel über ein Bussystem des elektronischen Geräts 102 an das Programm 140 gesendet wird. Das Programm 140 empfängt also den von der Nutzer-Schnittstelle 110 signierten Code C1, den von der Kommunikations-Schnittstelle 108 signierten Code C2, den von dem Prozessor 112 signierten Code C3 und den von dem Chipkarten-Lesegerät 118 signierten Code C4. Aus diesen Codes C1 und C4 ermittelt das Programm 140 dann nach einem vorgegebenen Algorithmus den Identifikator 103, der dann für die Generierung der Einwahlanforderung 172 verwendet wird.

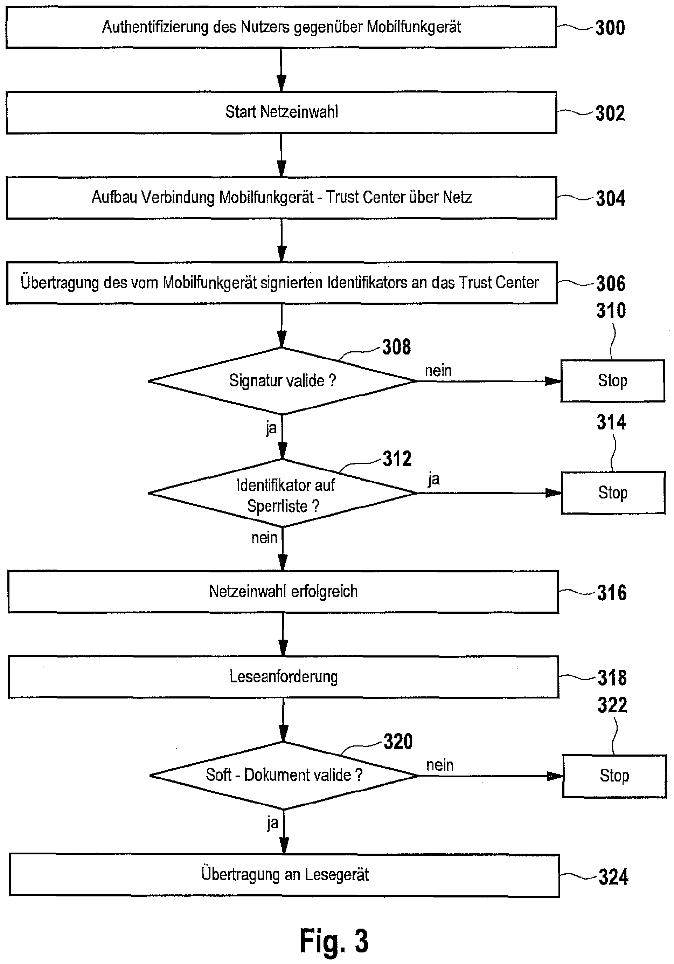

Die Figur 3 zeigt ein Flussdiagramm einer Ausführungsform der Erfindung. In dem Schritt 300 schaltet der Nutzer das elektronische Gerät, bei dem es sich hier um ein Mobilfunkgerät handelt, ein und authentifiziert sich dann gegenüber dem Mobilfunkgerät, zum Beispiel durch Eingabe seiner PIN. Nach erfolgreicher Authentifizierung des Nutzers wird in dem Schritt 302 die Netzeinwahl des Mobilfunkgeräts in das Kommunikationsnetz, bei dem es sich zum Beispiel um ein digitales zellulares Mobilfunknetz z.B. nach dem GSM oder UMTS Standard handelt, gestartet.

Zwischen dem Mobilfunkgerät und dem Servercomputer eines Trust-Centers wird hierzu in dem Schritt 304 eine Kommunikationsverbindung über das Kommunikationsnetz aufgebaut. In dem Schritt 306 wird ein signierter Identifikator von dem Mobilfunkgerät über diese Kommunikationsverbindung an das Trust-Center gesendet. Je nach Ausführungsform greift hierzu das Mobilfunkgerät auf den in dem Mobilfunkgerät gespeicherten Identifikator zu oder der Identifikator wird durch das Mobilfunkgerät generiert. Zur Generierung des Identifikators kann so wie mit Bezugnahme auf die Figur 2 dargestellt vorgegangen werden. Die Signatur des Identifikators wird durch das TPM des Mobilfunkgeräts, beispielsweise also durch die in dem Chipkarten-Lesegerät befindliche SIM-Karte, generiert.

In dem Schritt 308 wird durch den Servercomputer des Trust-Centers geprüft, ob die Signatur des Identifikators valide ist. Ist dies nicht der Fall, so ist eine Abbruchbedingung erfüllt (Schritt 310). Zur Validität der Signatur ist es erforderlich, dass das Zertifikat der Signatur nicht auf der CRL des Servercomputers steht und dass der in dem Zertifikat der Signatur angegebene Identifikator mit dem Identifikator der Einwahlanforderung übereinstimmt.
Wenn die Signatur valide ist, wird danach in dem Schritt 312 geprüft, ob der mit der Einwahlanforderung empfangene Identifikator auf der Sperrliste des Servercomputers steht. Wenn dies der Fall ist, ist eine weitere Abbruchbedingung erfüllt (Schritt 314). Ist dies nicht der Fall, so wird die Netzeinwahl des Mobilfunkgeräts in das Telekommunikationsnetz in dem Schritt 316 abgeschlossen. Daraufhin kann zwischen dem Lesegerät und dem Mobilfunkgerät über das Kommunikationsnetz eine Kommunikationsverbindung aufgebaut werden, über die eine Leseanforderung an das Mobilfunkgerät gerichtet wird (Schritt 318). In dem Schritt 320 wird dann geprüft, ob das Soft-Dokument, auf welches sich die Leseanforderung bezieht, valide ist. Wenn das Soft-Dokument nicht valide ist, so ist eine weitere Abbruchbedingung in dem Schritt 322 erfüllt. Im gegenteiligen Fall kann das Soft-Dokument verwendet werden. Es werden dann die in der Leseanforderung spezifizierten Daten aus dem Soft-Dokument gelesen und in dem Schritt 324 über die Kommunikationsverbindung an das Lesegerät übertragen.

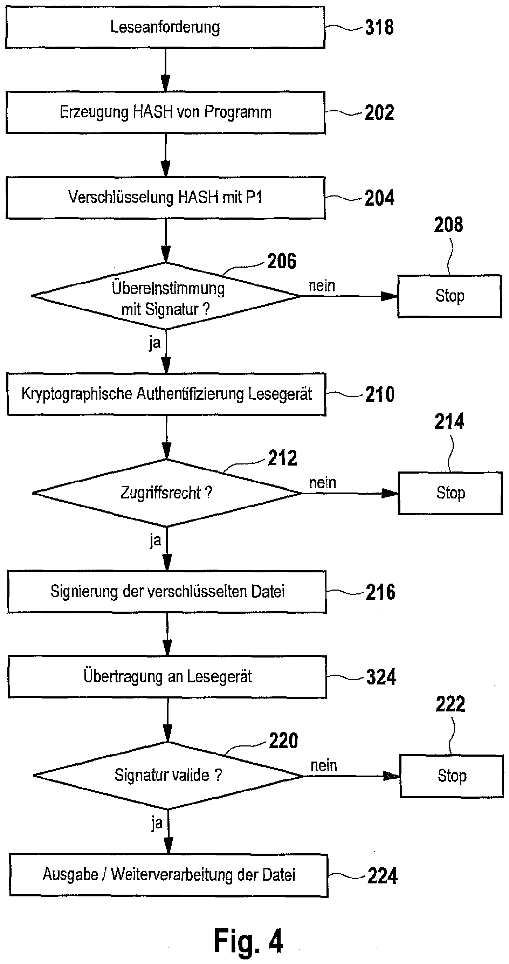

Die Figur 4 zeigt eine Ausführungsform der Validitätsprüfung des Soft-Dokuments, wie sie zwischen den Schritten 318 und 324 ausgeführt werden kann:
In dem Schritt 318 empfängt das elektronische Gerät die von dem Lesegerät signierte Leseanforderung. Daraufhin wird durch das TPM geprüft, ob das Programm unversehrt ist. Hierzu wird in dem Schritt 202 ein HASH-Wert des Programms oder eines Programmteils erzeugt und in dem Schritt 204 wird dieser HASH-Wert mit dem Schlüssel P1 des TPM verschlüsselt. In dem Schritt 206 wird geprüft, ob das Ergebnis der Verschlüsselung in dem Schritt 204 mit der Signatur des Programms übereinstimmt. Ist dies nicht der Fall, so wird in dem Schritt 208 der Ablauf abgebrochen.

Stimmen hingegen das Ergebnis der Verschlüsselung und die Signatur des Programms überein, so gilt das Programm als authentisch und in dem Schritt 210 erfolgt eine kryptografische Authentifizierung zumindest des Lesegeräts gegenüber dem elektronischen Gerät, beispielsweise mittels eines Challenge-Response-Protokolls. Zur Durchführung des Challenge-Response-Protokolls kann das mit der signierten Leseanforderung empfangene Zertifikat Z2, welches dem Lesegerät bzw. dessen Chipkarte zugeordnet ist, verwendet werden.

Nach einer erfolgreichen Authentifizierung des Lesegeräts wird in dem Schritt 212 geprüft, ob das Lesegerät die zum Lesen der in der Leseanforderung spezifizierten Daten erforderlichen Zugriffsrechte hat. Hierzu wird überprüft, ob die in dem Zertifikat beinhaltete Rechtespezifikation die zum Lesen der in der Leseanforderung spezifizierten Daten erforderlichen Rechte einräumt. Ist dies nicht der Fall, so erfolgt in dem Schritt 214 ein Abbruch; wenn die Zugriffsrechte hingegen ausreichend sind, wird auf die in der Leseanforderung spezifizierten verschlüsselten Daten der Datei durch das elektronische Gerät zugegriffen, und diese werden zum Beispiel in einem Arbeitsspeicher des elektronischen Geräts geladen.

Es erfolgt dann eine Signierung der betreffenden verschlüsselten Daten durch das TPM des elektronischen Geräts mit Hilfe des privaten Schlüssels P1 (Schritt 220). Die verschlüsselten und signierten Daten werden dann in dem Schritt 324 an das Lesegerät übertragen.

Das Lesegerät prüft in dem Schritt 220, ob die Signatur der verschlüsselten Daten valide ist. Hierzu wird auf die CRL zugegriffen, um zu überprüfen, ob das Zertifikat Z1 der verschlüsselten Daten gültig ist. Ist dies nicht der Fall, so erfolgt in dem Schritt 222 ein Abbruch. Im gegenteiligen Fall erfolgt in dem Schritt 224 eine Entschlüsselung der verschlüsselten Daten mit Hilfe des privaten Schlüssels P2, auf den das Lesegerät Zugriff hat, und eine Ausgabe und/oder Weiterverarbeitung der ausgelesenen Daten.

### Bezugszeichenliste

- 100: Telekommunikationssystem
- 101: Kommunikationsnetz
- 102: elektronisches Gerät
- 103: Identifikator
- 104: Lesegerät
- 106: Servercomputer
- 108: Kommunikations-Schnittstelle
- 110: Nutzer-Schnittstelle
- 112: Prozessor
- 114: Speicher
- 116: SIM-Karte
- 118: Chipkarten-Lesegerät
- 119: Programm
- 120: Programminstruktionen
- 122: Programminstruktionen
- 124: Datei
- 126: Daten
- 128: Datenfeld
- 130: Datenfeld
- 132: Datenfeld
- 134: Lesekommando
- 136: Antwort
- 138: Signatur
- 140: Programm
- 142: Prozessor
- 144: Programminstruktionen
- 146: Programminstruktionen
- 148: Signatur
- 150: Kommunikations-Schnittstelle
- 152: Chipkarten-Lesegerät
- 154: Chipkarte
- 156: Rechtespezifikation
- 158: Certificate Revocation List (CRL)
- 160: Abfrage
- 162: Kommunikations-Schnittstelle
- 164: Netzkomponente
- 166: Prozessor
- 168: Programminstruktionen
- 170: Sperrliste
- 172: Einwahlanforderung
- 174: Freigabesignal

## Patentansprüche

1. Elektronisches Gerät (102), welches als Mobilfunkgerät ausgebildet ist, mit
- einer Kommunikations-Schnittstelle (108) zu einem Kommunikationsnetz (101), das nach einem digitalen Mobilfunkstandard ausgebildet ist,
- Prozessormitteln (112) zur Ausführung eines Programms (119), wobei das Programm (119) ausführbare Programminstruktionen (120, 122) und eine Datei (124) beinhaltet,
- einem Tamper Proof Module (116) zur Sicherung des Programms (119) und zur Erzeugung einer elektronischen Signatur, wobei durch das von dem Tamper Proof Module gesicherte Programm (119) die Funktionalität mehrerer Chipkarten zur Verfügung gestellt wird,
wobei dem elektronischen Gerät (102) ein Identifikator (103) zugeordnet ist, wobei die Kommunikations-Schnittstelle (108) dazu ausgebildet ist, anlässlich einer Einwahl in das Kommunikationsnetz (101) den von dem Tamper Proof Module signierten Identifikator (103) über das Kommunikationsnetz (101) zu senden, wobei das Programm (119) zur Verarbeitung eines über das Kommunikationsnetz (101) mittels der Kommunikations-Schnittstelle (108) empfangenen Lesekommandos (134) von einem externen Lesegerät (104) und zur Ausgabe von durch das Lesekommando (134) spezifizierten Daten (D1) der Datei (124) über das Kommunikationsnetz (101) mittels der Kommunikations-Schnittstelle (108) an das externe Lesegerät (104) ausgebildet ist, wobei es sich bei dem Lesekommando (134) um ein Chipkarten-Kommando handelt, wobei die Kommunikations-Schnittstelle (108) so ausgebildet ist, dass sie eine Standard-Chipkarten-Schnittstelle bei dem Empfangen des Chipkarten-Lesekommandos und der Ausgabe der Datei (124) emuliert, wobei die Verarbeitung des Chipkarten-Lesekommandos durch die Funktionalität einer der mehreren Chipkarten bewirkt wird.

2. Elektronisches Gerät (102) nach Anspruch 1, wobei es sich um ein tragbares Gerät handelt, insbesondere ein Mobilfunkgerät, zum Beispiel ein Mobiltelefon, Smartphone oder einen tragbaren Computer mit Mobilfunk-Schnittstelle und/oder wobei die Kommunikations-Schnittstelle (108) als digitale zellulare Mobilfunkschnittstelle ausgebildet ist.

3. Elektronisches Gerät (102) nach Anspruch 1 oder 2, wobei die Kommunikations-Schnittstelle (108) als TCP/IP-Schnittstelle ausgebildet ist und wobei das Programm (119) einem vordefinierten IP-Port zugeordnet ist, wobei das Programm (119) aufgrund des Empfangs des Lesekommandos (124) an dem vordefinierten IP-Port gestartet wird und/oder wobei die Kommunikations-Schnittstelle (108) als Web-Service ausgebildet ist, sodass das Lesekommando (124) in Form eines Web-Service-Request empfangbar ist und/oder wobei das Tamper Proof Module als Chipkarte, insbesondere als Telekommunikations-Chipkarte, beispielsweise als SIM-Karte, ausgebildet ist.

4. Elektronisches Gerät (102) nach einem der vorhergehenden Ansprüche, wobei das Tamper Proof Module dazu ausgebildet ist, eine Signatur (138) des Programms (119) zu prüfen, wobei die Programminstruktionen (120, 122) nur dann ausgeführt werden, wenn die Signatur (138) gültig ist.

5. Elektronisches Gerät (102) nach einem der vorhergehenden Ansprüche, wobei dem Tamper Proof Module ein erstes Zertifikat (Z1) und ein erstes asymmetrisches kryptografisches Schlüsselpaar (O1, P1) zugeordnet ist, wobei das Tamper Proof Module dazu ausgebildet ist, die Signatur (138) mit Hilfe des ersten kryptografischen Schlüsselpaars und des ersten Zertifikats zu prüfen.

6. Elektronisches Gerät (102) nach einem der vorhergehenden Ansprüche, wobei die Daten (D1) mit einem öffentlichen Schlüssel (02) eines zweiten kryptografischen Schlüsselpaars (02, P2) verschlüsselt sind.

7. Elektronisches Gerät (102) nach Anspruch 5, wobei das Tamper Proof Module dazu ausgebildet ist, die Datei (124) und/oder die Daten (D1) vor der Ausgabe über die Kommunikations-Schnittstelle (108) mit Hilfe des ersten Zertifikats zu signieren.

8. Elektronisches Gerät (102) nach einem der vorhergehenden Ansprüche, mit Mitteln (140) zur Generierung des Identifikators (103), wobei die Mitteln zur Generierung des Identifikators (103) vorzugsweise zur Abfrage von Codes (C1, C2, C3, C4) von verschiedenen Komponenten (108, 110, 112, 118) des elektronischen Geräts (102) ausgebildet sind, um aus den Codes den Identifikator (103) zur generieren.

9. Telekommunikationssystem (100) mit einem elektronischen Gerät (102) nach einem der vorhergehenden Ansprüche, einer Netzkomponente (164) eines Telekommunikationsnetzes (101), einem Servercomputer (106) und einem Lesegerät (104), wobei die Netzkomponente (164) zum Aufbau einer Kommunikationsverbindung zwischen dem elektronischen Gerät (102) und dem Servercomputer (106) ausgebildet ist, die zur Übertragung des signierten Identifikators (103) von dem elektronischen Gerät (102) zu dem Servercomputer (106) dient, wobei der Servercomputer (106) zur Prüfung der Validität der Signatur des Identifikators (103) und zum Zugriff auf eine Sperrliste (170) von Identifikatoren ausgebildet ist, wobei der Servercomputer (106) zur Erzeugung eines Freigabesignals (174) ausgebildet ist, wenn die Signatur des Identifikators (103) valide ist und der Identifikator (103) nicht gesperrt ist, wodurch die Einwahl des elektronischen Geräts (102) in das Telekommunikationsnetz (101) ermöglicht wird, wobei das Lesegerät (104) eine Kommunikations-Schnittstelle (150) zum Aufbau einer Kommunikationsverbindung mit der Kommunikations-Schnittstelle (108) des elektronischen Geräts (102), Prozessormittel (142) zur Generierung des Lesekommandos (134) und zum Empfang der Daten (D1) über die Kommunikationsverbindung aufweist.

10. Telekommunikationssystem (100) nach Anspruch 9, wobei das Lesegerät (104) zur Prüfung einer Signatur der Datei (124) und/oder der Daten (D1) ausgebildet ist, und mit einem Servercomputer (106), in dem eine CRL (158) gespeichert ist, und auf den von dem Lesegerät aus zugegriffen werden kann.

11. Telekommunikationssystem (100) nach Anspruch 9 oder 10, wobei die Prozessormittel (142) des Lesegeräts (104) und die Prozessormittel (112) des elektronischen Geräts (102) zur Ausführung eines kryptografischen Protokolls (122, 146) für die Authentifizierung des Lesegeräts (104) gegenüber dem elektronischen Gerät (102) ausgebildet sind, wobei dem Lesegerät (104) vorzugsweise ein zweites Zertifikat (Z2) zugeordnet ist, in dem Zugriffsrechte des Lesegeräts (104) auf die Daten (D1) spezifiziert sind, wobei das kryptografische Protokoll mit Hilfe des zweiten Zertifikats durchgeführt wird.

12. Telekommunikationssystem (100) nach einem der Ansprüche 9 bis 11, wobei das Freigabesignal (174) von dem Servercomputer (106) an die Netzkomponente (164) über das Telekommunikationsnetz (101) übertragbar ist.

13. Verfahren zum Lesen von spezifizierten Daten (D1) aus einem elektronischen Gerät (102) nach einem der vorhergehenden Ansprüche 1 bis 8, mit folgenden Schritten:
- Authentifizierung eines Nutzers gegenüber dem elektronischen Gerät (102),
- Start der Ausführung von Programminstruktionen (140) zur Einwahl des elektronischen Geräts (102) in das Kommunikationsnetzwerk (101),
- Senden eines dem elektronischen Gerät (102) zugeordneten mittels eines Tamper Proof Module (116) signierten Identifikators (103) an einen Servercomputer (106),
- Prüfung der Validität der Signatur des Identifikators (103) und Prüfung, ob der Identifikator (103) auf einer Sperrliste (170) steht, durch den Servercomputer (106),
- Erzeugung eines Freigabesignals (174) durch den Servercomputer (106), um die Einwahl des elektronischen Geräts (102) in das Kommunikationsnetzwerk (101) zu ermöglichen,
- Sicherung eines Programms (119) des elektronischen Geräts (102) mittels eines Tamper Proof Modules (116), wobei das Programm (119) weitere ausführbare Programminstruktionen (120, 122) und eine Datei (124) mit den Daten (D1) beinhaltet, wobei durch das von dem Tamper Proof Module gesicherte Programm (119) die Funktionalität mehrerer Chipkarten zur Verfügung gestellt wird,
- Empfang des Lesekommandos (134) über die Kommunikations-Schnittstelle (108) des elektronischen Geräts (102), wobei in dem Lesekommando (134) die auszulesenden Daten (D1) spezifiziert sind, wobei es sich bei dem Lesekommando (134) um ein Chipkarten-Kommando handelt, wobei die Kommunikations-Schnittstelle (108) eine Standard-Chipkarten-Schnittstelle bei dem Empfangen des Chipkarten-Lesekommandos emuliert,
- Verarbeitung des Chipkarten-Lesekommandos durch die Funktionalität einer der mehreren Chipkarten,
- Ausgabe der spezifizierten Daten (D1), wobei die Kommunikations-Schnittstelle (108) eine Standard-Chipkarten-Schnittstelle bei der Ausgabe der Datei emuliert.

14. Verfahren nach Anspruch 13, wobei das Verfahren ferner eine Signierung der spezifizierten auszulesenden Daten (D1) durch das Tamper Proof Module mit Hilfe eines ersten kryptografischen Schlüsselpaars (O1, P1) umfasst, welches dem Tamper Proof Module zugeordnet ist, und wobei die ausgegebenen spezifizierten Daten (D1) signiert sind.

15. Verfahren nach Anspruch 14, wobei die Datei (124) und/oder die Daten (D1) von einem Trust-Center signiert sind und wobei die Daten (D1) und/oder die Datei (124) mit Hilfe eines öffentlichen Schlüssels (02) eines zweiten kryptografischen Schlüsselpaars (02, P2) verschlüsselt sind, wobei die Daten (D1) vorzugsweise durch das Tamper Proof Module gegen Manipulationen geschützt werden, wobei die Daten (D1) vorzugsweise dem Tamper Proof Module fest zugeordnet sind, wodurch ein Kopierschutz gegeben ist.

## Claims

1. An electronic device (102), which is configured as a mobile radio device, comprising
- a communication interface (108) to a communication network (101), which is configured according to a digital mobile radio standard,
- processor means (112) for executing a program (119), wherein the program (119) contains executable program instructions (120, 122) and a file (124),
- a tamper-proof module (116) for securing the program (119) and for generating an electronic signature, wherein the functionality of a plurality of chip cards is provided by means of the program (119) secured by the tamper-proof module,
wherein an identifier (103) is assigned to the electronic device (102),
wherein, in the event of dial-up access to the communication network (101), the communication interface (108) is configured to transmit over the communication network (101) the identifier (103) signed by the tamper-proof module, wherein the program (119) is configured to process a read command (134) received over the communication network (101) by means of the communication interface (108) from an external reader (104) and to output data (D1) of the file (124) specified by the read command (134) over the communication network (101) by means of the communication interface (108) to the external reader (104), wherein the read command (134) is a chip card command, wherein the communication interface (108) is configured such that it emulates a standard chip card interface for the receipt of the chip card read command and the output of the file (124), wherein the processing of the chip card read command is effected by the functionality of one of the plurality of chip cards.

2. The electronic device (102) according to claim 1, wherein said electronic device is a portable device, in particular a mobile radio device, for example a mobile telephone, smartphone, or a portable computer with mobile radio interface, and/or wherein the communication interface (108) is configured as a digital cellular mobile radio interface.

3. The electronic device (102) according to claim 1 or 2, wherein the communication interface (108) is configured as a TCP/IP interface, and wherein the program (119) is assigned a predefined IP port, wherein the program (119) is started on account of the receipt of the read command (124) at the predefined IP port, and/or wherein the communication interface (108) is configured as a web service so that the read command (124) may be received in the form of a web service request, and/or wherein the tamper-proof module is configured as a chip card, in particular as a telecommunications chip card, for example as a SIM card.

4. The electronic device (102) according to one of the preceding claims, wherein the tamper-proof module is configured to check a signature (138) of the program (119), wherein the program instructions (120, 122) are executed only if the signature (138) is valid.

5. The electronic device (102) according to one of the preceding claims, wherein the tamper-proof module is assigned a first certificate (Z1) and a first asymmetric cryptographic key pair (O1, P1), wherein the tamper-proof module is configured to check the signature (138) with the aid of the first cryptographic key pair and the first certificate.

6. The electronic device (102) according to one of the preceding claims, wherein the data (D1) are encrypted using a public key (02) of a second cryptographic key pair (02, P2).

7. The electronic device (102) according to claim 5, wherein the tamper-proof module is configured to sign the file (124) and/or the data (D1) with the aid of the first certificate prior to the output over the communication interface (108).

8. The electronic device (102) according to one of the preceding claims, comprising means (140) for generating the identifier (103), wherein the means for generating the identifier (103) are preferably configured to query codes (C1, C2, C3, C4) from different components (108, 110, 112, 118) of the electronic device (102) in order to generate the identifier (103) from the codes.

9. A telecommunications system (100) comprising an electronic device (102) according to one of the preceding claims, a network component (164) of a telecommunications network (101), a server computer (106) and a reader (104), wherein the network component (164) is configured to establish a communication link between the electronic device (102) and the server computer (106), which link is used to transfer the signed identifier (103) from the electronic device (102) to the server computer (106), wherein the server computer (106) is configured to check the validity of the signature of the identifier (103) and to access a blocked list (170) of identifiers, wherein the server computer (106) is configured to generate a release signal (174) if the signature of the identifier (103) is valid and the identifier (103) is not blocked, thus granting the electronic device (102) dial-up access to the telecommunications network (101), wherein the reader (104) has a communication interface (150) for establishing a communication link to the communication interface (108) of the electronic device (102), and processor means (142) for generating the read command (134) and for receiving the data (D1) over the communication link.

10. The telecommunications system (100) according to claim 9, wherein the reader (104) is configured to check a signature of the file (124) and/or the data (D1), and comprising a server computer (106) in which a CRL (158) is stored and which may be accessed by the reader.

11. The telecommunications system (100) according to claim 9 or 10, wherein the processor means (142) of the reader (104) and the processor means (112) of the electronic device (102) are configured to execute a cryptographic protocol (122, 146) for the authentication of the reader (104) to the electronic device (102), wherein the reader (104) is preferably assigned a second certificate (Z2), in which access rights of the reader (104) to the data (D1) are specified, wherein the cryptographic protocol is executed with the aid of the second certificate.

12. The telecommunications system (100) according to one of claims 9 to 11, wherein the release signal (174) is transmittable from the server computer (106) to the network component (164) over the telecommunication network (101).

13. A method for reading specified data (D1) from an electronic device (102) according to one of preceding claims 1 to 8, comprising the following steps:
- authenticating a user to the electronic device (102),
- starting the execution of program instructions (140) in order for the electronic device (102) to gain dial-up access to the communication network (101),
- sending an identifier (103) assigned to the electronic device (102) and signed by means of a temper-proof module (116) to a server computer (106),
- by means of the server computer (106), checking the validity of the signature of the identifier (103) and checking whether the identifier (103) is on a blocked list (170),
- generating a release signal (174) by the server computer (106) in order to allow the electronic device (102) to gain dial-up access to the communication network (101),
- securing a program (119) of the electronic device (102) by means of a tamper-proof module (116), wherein the program (119) contains further executable program instructions (120, 122) and a file (124) with the data (D1), wherein the functionality of a plurality of chip cards is provided by means of the program (119) secured by the tamper-proof module,
- receiving the read command (134) over the communication interface (108) of the electronic device (102), wherein the data (D1) to be read out are specified in the read command (134), wherein the read command (134) is a chip card command, wherein the communication interface (108) emulates a standard chip card interface for the receipt of the chip card read command,
- processing the chip card read command by means of the functionality of one of the plurality of chip cards,
- outputting the specified data (D1), wherein the communication interface (108) emulates a standard chip card interface for the output of the file.

14. The method according to claim 13, wherein the method also comprises a signing of the specified data (D1) to be read out, the signing being performed by the tamper-proof module with the aid of a first cryptographic key pair (O1, P1) which is assigned to the tamper-proof module, and wherein the output specified data (D1) are signed.

15. The method according to claim 14, wherein the file (124) and/or the data (D1) are signed by a trust centre, and wherein the data (D1) and/or the file (124) are encrypted with the aid of a public key (02) of a second cryptographic key pair (02, P2), wherein the data (D1) are preferably protected by the tamper-proof module against manipulation, wherein the data (D1) are preferably assigned definitively to the tamper-proof module, thus providing copy protection.

## Revendications

1. Appareil électronique (102), lequel est conçu sous forme d'appareil radio mobile, doté
- d'une interface de communication (108) vers un réseau de communication (101), qui est conçu selon une norme radio mobile numérique,
- de moyens processeurs (112) permettant l'exécution d'un programme (119), où le programme (119) contient des instructions de programme (120, 122) exécutables et un fichier (124),
- d'un module avec sceau de sécurité (116) pour la protection du programme (119) et la création d'une signature électronique, où la fonctionnalité de plusieurs cartes à puce est mise à disposition par le programme (119) sécurisée par le module à sceau de sécurité,
dans lequel un identificateur (103) est associé à l'appareil électronique (102),
dans lequel l'interface de communication (108) est conçue pour, à l'occasion d'une connexion dans le réseau de communication (101), envoyer l'identificateur (103) signé par le module à sceau de sécurité par le biais du réseau de communication (101), où le programme (119) est conçu pour le traitement d'un ordre de lecture (134) provenant d'un lecteur (104) extérieur, reçu par le biais du réseau de communication (101) au moyen de l'interface de communication (108) et pour la production de données (D1) du fichier (124) spécifiées par l'ordre de lecture (134) par le biais du réseau de communication (101) au moyen de l'interface de communication (108) au lecteur (104) extérieur, où, dans le cas de l'ordre de lecture (134), il s'agit d'un ordre de carte à puce, où l'interface de communication (108) est conçue de sorte à ce qu'elle émule une interface de carte à puce normalisée lors de la réception de l'ordre de lecture de carte à puce et de la production du fichier (124), où le traitement de l'ordre de lecture de carte à puce est activé par la fonctionnalité d'une des nombreuses cartes à puce.

2. Appareil électronique (102) selon la revendication 1, où il s'agit d'un appareil portatif, notamment un appareil radio mobile, par exemple, un téléphone mobile, un Smartphone ou un ordinateur portable doté d'une interface radio mobile et/ou où l'interface de communication (108) est conçue sous forme d'une interface radio mobile cellulaire numérique.

3. Appareil électronique (102) selon la revendication 1 ou la revendication 2, dans lequel l'interface de communication (108) est conçue sous forme d'interface TCP/IP et dans lequel le programme (119) est associé à un port IP prédéfini, dans lequel le programme (119), en raison de la réception de l'ordre de lecture (124), est démarré au port IP prédéfini, et/ou dans lequel l'interface de communication (108) est conçue sous forme d'un service du web de sorte que l'ordre de lecture (124) peut être réceptionné sous la forme d'une requête à un service du web, et/ou dans lequel le module à sceau de sécurité est conçu sous forme de carte à puce, notamment sous forme de carte à puce de télécommunication, par exemple, sous forme de carte SIM.

4. Appareil électronique (102) selon l'une des revendications précédentes, dans lequel le module à sceau de sécurité est conçu pour vérifier une signature (138) du programme (119), dans lequel les instructions de programme (120, 122) ne sont exécutées que si la signature (138) est valide.

5. Appareil électronique (102) selon l'une des revendications précédentes, dans lequel un premier certificat (Z1) et une première paire de clés cryptographiques (O1, P1) asymétrique sont associés au module à sceau de sécurité, dans lequel le module à sceau de sécurité est conçu pour vérifier la signature (138) à l'aide de la première paire de clés cryptographiques et du premier certificat.

6. Appareil électronique (102) selon l'une des revendications précédentes, dans lequel les données (D1) sont cryptées avec une clé publique (02) d'une deuxième paire de clés cryptographiques (02, P2).

7. Appareil électronique (102) selon la revendication 5, dans lequel le module à sceau de sécurité est conçu pour signer le fichier (124) et/ou les données (D1) avant la production par le biais de l'interface de communication (108) à l'aide du premier certificat.

8. Appareil électronique (102) selon l'une des revendications précédentes, doté de moyens (140) permettant la génération de l'identificateur (103), dans lequel les moyens pour la génération de l'identificateur (103) sont conçus de préférence pour effectuer la requête de codes (C1, C2, C3, C4) de divers composants (108, 110, 112, 118) de l'appareil électronique (102), afin de générer l'identificateur (103) à partir des codes.

9. Système de télécommunication (100) doté d'un appareil électronique (102) selon l'une des revendications précédentes, d'un composant réseau (164) d'un réseau de télécommunications (101), d'un ordinateur serveur (106) et d'un lecteur (104), dans lequel le composant réseau (164) est conçu pour l'établissement d'une liaison de communication entre l'appareil électronique (102) et l'ordinateur serveur (106), qui sert à la transmission de l'identificateur (103) signé de l'appareil électronique (102) vers l'ordinateur serveur (106), dans lequel l'ordinateur serveur (106) est conçu pour la vérification de la validité de la signature de l'identificateur (103) et pour l'accès à une liste d'exclusion (170) d'identificateurs, dans lequel l'ordinateur serveur (106) est conçu pour la création d'un signal de production (174) lorsque la signature de l'identificateur (103) est valide et que l'identificateur (103) n'est pas exclu, ce par quoi la connexion de l'appareil électronique (102) au réseau de télécommunications (101) est rendue possible, dans lequel le lecteur (104) présente une interface de communication (150) permettant l'établissement d'une liaison de communication avec l'interface de communication (108) de l'appareil électronique (102), des moyens processeurs (142) permettant la génération de l'ordre de lecture (134) et la réception des données (D1) par le biais de la liaison de communication.

10. Système de télécommunications (100) selon la revendication 9, dans lequel le lecteur (104) est conçu pour la vérification d'une signature du fichier (124) et/ou des données (D1), et peut être accessible à partir du lecteur avec un ordinateur serveur (106, dans lequel est stockée une liste de certificats révoqués CRL (158).

11. Système de télécommunications (100) selon la revendication 9 ou la revendication 10, dans lequel les moyens processeurs (142) du lecteur (104) et les moyens processeurs (112) de l'appareil électronique (102) sont conçus pour l'exécution d'un protocole cryptographique (122, 146) permettant l'authentification du lecteur (104) vis-à-vis de l'appareil électronique (102), dans lequel un deuxième certificat (Z2) est de préférence associé au lecteur (104) dans lequel des droits d'accès du lecteur (104) aux données (D1) sont spécifiés, dans lequel le protocole cryptographique est exécuté à l'aide du deuxième certificat.

12. Système de télécommunications (100) selon lune des revendications 9 à 11, dans lequel le signal de production (174) peut être transmis de l'ordinateur serveur (106) au composant réseau (164) par le biais du réseau de télécommunications (101).

13. Procédé de lecture de données (D1) spécifiques à partir d'un appareil électronique (102) selon l'une des revendications précédentes 1 à 8, avec les étapes suivantes :
- l'authentification d'un utilisateur vis-à-vis d'un appareil électronique (102),
- le démarrage de l'exécution d'instructions de programme (140) pour la connexion de l'appareil électronique (102) dans le réseau de télécommunications (101),
- l'envoi d'un identificateur (103) associé à l'appareil électronique (102) et signé au moyen d'un module à sceau de sécurité (116) à un ordinateur serveur (106),
- la vérification de la validité de la signature de l'identificateur (103) et la vérification si l'identificateur (103) est écrit sur une liste d'exclusion (170) par l'ordinateur serveur (106),
- la création d'un signal de production (174) par l'ordinateur serveur (106) afin de rendre possible la connexion de l'appareil électronique (102) au réseau de communication (101),
- la protection d'un programme (119) de l'appareil électronique (102) au moyen de modules à sceau de sécurité (116), où le programme (119) contient d'autres instructions de programme (120, 122) exécutables et un fichier (124) avec les données (D1), où la fonctionnalité de plusieurs cartes à puce est définie par le programme (119) protégé par le module à sceau de sécurité,
- la réception de l'ordre de lecture (134) par le biais de l'interface de communication (108) de l'appareil électronique (102), où les données (D1) à lire sont spécifiées dans l'ordre de lecture (134), où, dans le cas de l'ordre de lecture (134), il s'agit d'un ordre de carte à puce, où l'interface de communication (108) émule une interface de carte à puce normalisée lors de la réception de l'ordre de lecture de carte à puce,
- le traitement de l'ordre de lecture de carte à puce par la fonctionnalité d'une des nombreuses cartes à puce,
- la production des données (D1) spécifiques, où l'interface de communication (108) émule une interface de carte à puce normalisée lors de la production du fichier.

14. Procédé selon la revendication 13, où le procédé comprend en outre une signature des données (D1) à lire spécifiées par le module à sceau de sécurité à l'aide d'une première paire de clés cryptographiques (O1, P1), laquelle est associée au module à sceau de sécurité, et où les données (D1) spécifiées produites sont signées.

15. Procédé selon la revendication 14, dans lequel le fichier (124) et/ou les données (D1) sont signées par un centre de confiance et dans lequel les données (D1), et/ou le fichier (124), sont cryptés à l'aide d'une clé publique (02) d'une deuxième paire de clés cryptographiques (02, P2), dans lequel les données (D1) sont de préférence protégées contre des manipulations par le module à sceau de sécurité, dans lequel les données (D1) sont solidement associées au module à sceau de sécurité, ce par quoi une protection contre la copie est donnée.
